# FASCICULE DE BREVET EUROPEEN

(11) **EP 2 535 793 B1**
(45) Date de publication et mention de la délivrance du brevet: **24.12.2014**
(21) Numéro de dépôt: 12172040.3
(22) Date de dépôt: 14.06.2012
(51) Int. Cl.: G06F 3/044, G06F 3/041

(54) **Dispositif tactile multitouches à détection capacitive multi-fréquence**
Vorrichtung zur kapazitiven Detektion von Mehrfachberührung mit Mehrfrequenztechnik
Multi-touch sensing device with multi-frequency capacitive sensing

(30) Priorité: 17.06.2011 FR 1101860
(43) Date de publication de la demande: 19.12.2012
(73) Titulaire: Thales, 92200 Neuilly Sur Seine (FR)
(72) Inventeur: Coni, Philippe, 33127 Saint Jean d'Illac (FR); Sontag, Yves, 33200 Bordeaux (FR)
(74) Mandataire: Bréda, Jean-Marc

(56) Documents cités:
- EP-A2- 2 196 889
- FR-A1- 2 952 730
- US-A1- 2009 273 579

## Description

Le domaine de l'invention est celui des surfaces tactiles ou « touchscreen » à détection capacitive et plus particulièrement des surfaces tactiles dites multitouches ou « multitouch » permettant la détection de deux appuis simultanés. Cette fonction est essentielle pour réaliser par exemple des « zooms » ou des rotations d'image. Cette invention peut s'appliquer dans différentes utilisations mais elle est particulièrement bien adaptée aux contraintes du domaine aéronautique et des planches de bord d'aéronef.

La détection capacitive dite « projetée » consiste à réaliser une matrice de détection agencée de façon à détecter les variations locales de capacité introduites par la proximité des doigts de l'utilisateur ou de tout autre objet de désignation conducteur. La technologie dite capacitive projetée se décline en deux variantes principales qui sont :
- Détection « Self capacitive » qui consiste à lire les lignes puis les colonnes du réseau de touches de la matrice ;
- Détection dite « Mutual capacitive » consistant à lire chaque intersection du réseau de touches de la matrice ;

La technologie « Mutual capacitive » nécessite la lecture de toute la dalle. Ainsi, si la matrice comporte N lignes et M colonnes, il faut réaliser N x M acquisitions, rendant problématique la réalisation de dalles de grande taille, de haute résolution et à faible temps de réponse. De plus, la capacité à mesurer en « Mutual capacitance » est plus faible que celle obtenue en « Self capacitive », ce qui rend problématique l'usage de gants par l'utilisateur.

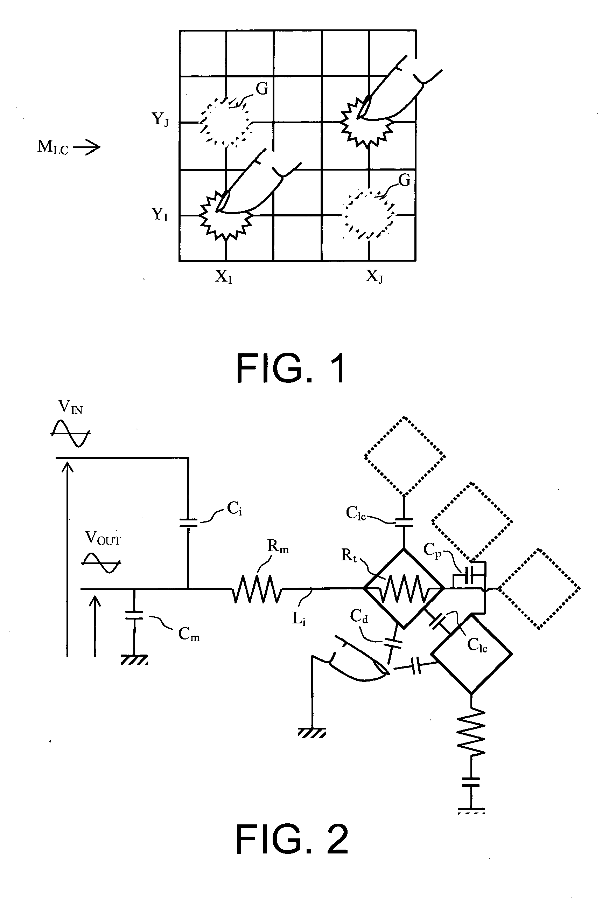

L'avantage de la détection « Self capacitive » est que, pour la dalle précédente, le système nécessite uniquement N+M acquisitions pour réaliser une lecture de la matrice. L'inconvénient majeur de la technologie « Self capacitive » est l'absence de solution simple permettant de résoudre le problème des appuis fantômes ou « Ghosts ». La figure 1 illustre ce problème. Elle représente une vue partielle d'une matrice M_{LC} de lignes et de colonnes conductrices. Sur cette figure et sur les suivantes, les appuis sont représentés par deux doigts. Lorsque deux appuis simultanés se produisent en (X_{I}, Y_{I}) et (X_{J}, Y_{J}), le système détecte les deux colonnes (X_{I}, X_{J}) et les deux lignes (Y_{I}, Y_{J}) sollicitées. Ces deux lignes et ces deux colonnes correspondent aux appuis réels mais également à deux appuis fantômes G disposés en (X_{I}, Y_{J}) et (X_{J}, Y_{I}) sans que le système puisse décider a priori quels sont les bons appuis.

Pour résoudre ce problème de ghosts, des parades ont été développées. Une première solution consiste à réaliser une discrimination temporelle basée sur la faible probabilité de l'occurrence d'un appui simultané dans la mesure où la vitesse d'acquisition de la dalle est très rapide. Toutefois, on ne traite pas le cas particulier des appuis parfaitement simultanés correspondant, par exemple, à l'approche de deux doigts pour effectuer une rotation d'image sur la surface tactile. On ne peut donc pas parler de vrai dispositif « multitouch ».

La demande de brevet EP 2 196 889 propose une méthode de discrimination basée sur la combinaison de deux balayages successifs dans les zones de la surface tactile susceptibles de comporter des appuis. La demande de brevet US 2009/273579 propose également une méthode discrimination comprenant deux étapes de détection.

La demande de brevet US2010/0177059 propose une méthode permettant de lever le doute par la mesure des capacités de couplage ligne/colonne au voisinage de l'appui. Ce couplage n'existant pas en cas de ghost, il est ensuite facile de déterminer la position de l'appui réel. Toutefois, une telle mesure nécessite un nombre conséquent d'interrupteurs ou « switchs » analogiques, sept par couple ligne-colonne dans le cas cité. Outre le surcoût non négligeable apporté, l'ajout de switchs augmente la capacité de couplage par rapport à la masse lorsqu'ils commutent les lignes ou les colonnes. En fait, ils agissent comme si un grand nombre de doigts étaient posés sur la dalle.

A titre d'exemple, un excellent switch en technologie JFET (Junction Field Effect Transistor) possède une capacité de couplage de 10 pF, alors qu'un doigt a une capacité de l'ordre du pF. Si 4 switchs sont mis en oeuvre, il faut mesurer une variation de 1 pF sur une valeur de 40 pF au lieu de 10 pF avec un seul switch. Il en résulte une perte de sensibilité d'un rapport 4. Cette perte de sensibilité est problématique lorsque l'utilisateur a la main gantée ou, lorsqu'en présence de bruit électromagnétique, le rapport signal/bruit se dégrade.

La mesure de capacité pose d'autres problèmes. Il existe principalement trois méthodes pour mesurer une capacité.

La plus ancienne est le pont diviseur capacitif dont une des branches est constituée d'une capacité de référence et l'autre de la capacité à mesurer. Une seconde méthode utilise un oscillateur à relaxation dont la fréquence dépend de la valeur de la capacité à mesurer. Ces deux méthodes sont connues pour être sensibles au bruit de lecture, en particulier en cas de perturbations radioélectriques, courantes sur un aéronef.

La troisième méthode et la plus utilisée aujourd'hui sur les produits grand public pour la détection capacitive sur les dalles tactiles est la mesure par transfert de charge. Il en existe différentes variantes qui donnent un bon rapport signal sur bruit. Cette méthode consiste à alimenter la capacité à mesurer par une impulsion ou « burst » de pulses carrés jusqu'à charger celle-ci à une valeur de référence. Le nombre de pulses nécessaire pour obtenir la charge de référence est représentatif de la capacité à mesurer.

Toutefois, cette mesure nécessite une pluralité de switchs, nécessaire au transfert des charges et à la génération des bursts. Les capacités parasites de ces switchs limitent la dynamique du signal et dégradent le rapport signal sur bruit.

Un autre inconvénient de cette méthode est sa faible robustesse aux perturbations électromagnétiques émises à une fréquence sensiblement égale à celle des bursts. En effet, les lignes et les colonnes se comportent alors comme des antennes et captent les ondes électromagnétiques. Elles vont induire des courants électriques parasites s'additionnant aux bursts de mesure et provoquer des mesures erronées.

Enfin, les méthodes de mesure capacitive utilisent principalement un signal alternatif de fréquence relativement élevée pour effectuer la mesure. Dans certains environnements tels que les cockpits d'aéronefs, les niveaux d'émission électromagnétique des équipements doivent être considérablement faibles afin de ne pas perturber certains équipements sensibles tel que les capteurs ou les antennes. La méthode de mesure par transfert de charge met en oeuvre des signaux carrés. Ces signaux génèrent des harmoniques qui créent des perturbations sur une large bande de fréquences, largement au dessus des seuils autorisés par les normes.

En conclusion, les écrans tactiles capacitifs projetés présentent actuellement de nombreux inconvénients qui rendent difficiles leur utilisation dans un cockpit d'aéronef ou dans tout environnement critique. En effet, comme on l'a vu, la détection des appuis peut être erronée par des appuis fantômes ou par des perturbations électromagnétiques externes. De plus, le principe de mesure peut perturber l'environnement électromagnétique.

Le dispositif tactile selon l'invention ne présente pas ces inconvénients. Son principe physique repose sur l'utilisation de tensions d'émission à deux fréquences différentes. On démontre que les signaux de sortie sur les lignes sur les colonnes ont, en fonction de la fréquence, des impédances différentes représentatives non seulement de la présence d'un appui sur une ligne et une colonne mais encore de sa position sur cette ligne et cette colonne.

Ce dispositif est « dual touch » sans ghosts, il est insensible au bruit de lecture et aux perturbations électromagnétiques extérieures et enfin, il est compatible des normes d'émission électromagnétique telles que celles spécifiées en aéronautique. De plus, l'utilisateur peut utiliser cette surface tactile avec les mains gantées avec le même niveau de performance.

Plus précisément, l'invention a pour objet un dispositif à écran tactile à détection capacitive projetée comprenant une dalle tactile matricielle comportant une pluralité de lignes conductrices et de colonnes conductrices, ladite dalle étant reliée à :
des moyens de commande électroniques générant, pour chaque ligne et pour chaque colonne conductrice, des tensions d'émission et ;
des moyens de réception et d'analyse électroniques des tensions de réception issues de chaque ligne et de chaque colonne conductrice, **caractérisé en ce** que :
   - les moyens de commande électroniques génèrent, pour chaque ligne et pour chaque colonne conductrice, une première tension d'émission périodique émise à une première fréquence notée fréquence de travail et une seconde tension d'émission périodique émise à une seconde fréquence notée fréquence de discrimination, différente de la première fréquence ;
   - Les moyens de réception et d'analyse électroniques sont agencés de façon à déterminer, pour chaque ligne et pour chaque colonne :
      ∘ La valeur d'une première tension de réception à la fréquence de travail et la valeur d'une seconde tension de réception à la fréquence de discrimination ;
      ∘ Si, en fonction de valeurs prédéterminées, les valeurs des deux tensions de réception sont représentatives d'un appui sur la dalle tactile et la localisation de cet appui sur la ligne et sur la colonne concernée.

Avantageusement, la valeur de la fréquence de travail est suffisamment faible pour provoquer de très faibles variations de la partie résistive des impédances des tensions de réception à cette fréquence de travail et la valeur de la fréquence de discrimination est suffisamment élevée pour provoquer des variations significatives de la partie résistive des impédances des tensions de réception à cette fréquence de discrimination.

Avantageusement, les moyens de réception et d'analyse électroniques des tensions de réception comportent deux démodulateurs synchrones, le premier démodulateur travaillant à la fréquence de travail, le second démodulateur à la fréquence de discrimination.

Avantageusement, les moyens de réception et d'analyse électroniques comportent :
- une table des valeurs stockées des tensions de réception à la fréquence de travail de chaque ligne et de chaque colonne en l'absence d'appui ;
- des moyens de comparaison établissant, pour chaque ligne et pour chaque colonne, les écarts entre les valeurs mesurées des tensions de réception et les valeurs stockées des tensions de réception de façon à déterminer si les écarts mesurés sont représentatifs d'un appui sur la ligne ou sur la colonne concernée.

Préférentiellement, la fréquence de travail est comprise entre 100 kHz et 500 kHz et la fréquence de discrimination est comprise entre 500 kHz et 5 MHz.

L'invention sera mieux comprise et d'autres avantages apparaîtront à la lecture de la description qui va suivre donnée à titre non limitatif et grâce aux figures annexées parmi lesquelles :
La figure 1 déjà commentée représente le problème des appuis fantômes dans un dispositif tactile capacitif projetée selon l'art antérieur ;
La figure 2 représente le schéma électrique des capacités et des résistances électriques autour d'un croisement entre une ligne et une colonne d'une dalle tactile ;
La figure 3 représente, en fonction de la fréquence appliquée, la variation du signal de sortie d'une ligne ou d'une colonne pour trois positions d'appui différentes dans un dispositif selon l'invention ;
La figure 4 représente, pour deux fréquences différentes, les variations du signal de sortie d'une ligne ou d'une colonne en fonction de la position de l'appui dans un dispositif selon l'invention ;
La figure 5 représente le synoptique d'un dispositif tactile capacitif projeté selon l'invention.

Il existe un modèle simplifié pour décrire électriquement un dispositif tactile capacitif comportant une matrice d'électrodes composée de lignes et de colonnes conductrices. Il consiste en une représentation de l'appui où le doigt de l'opérateur se couple capacitivement à la matrice en projetant la surface de son doigt sur la dalle. Cette surface recouvre au moins deux électrodes, une première en ligne et une seconde en colonne. On considère alors que l'opérateur rapporte une capacité C_{d} entre la terre et au moins la ligne ou la colonne concernée. Mais ce modèle reste local et ne tient pas compte de l'environnement de la mesure.

La figure 2 représente un modèle plus élaboré d'un dispositif matriciel capacitif. Chaque ligne est en fait connectée à un dispositif de mesure et/ou d'alimentation au travers de switchs analogiques. Ces switchs apportent une capacité de couplage Cₘ par rapport à la masse et présentent une résistance électrique Rₘ provoquant une atténuation du signal mesuré.

De plus, chaque ligne étant constituée d'un matériau transparent de type ITO (Indium Tin Oxide) qui présente une certaine résistance entre le point d'alimentation et le point de contact du doigt, cette résistance étant d'autant plus élevée que le doigt est éloigné du point de connexion. Si Rₜ est la résistance d'une touche et de sa connexion à la suivante, alors la résistance entre l'appui sur la colonne n et le bord de la matrice est de n.Rₜ.

D'autre part, le réseau de lignes et colonnes est mutuellement couplé. En effet, il existe une capacité Cp à chaque croisement de pistes, chaque ligne étant coupée par n colonne et d'autre part, les lignes ou colonne se couplent avec leurs voisines. Ce couplage est représenté sur la figure 2 par une capacité C_{lc}.

Enfin, il existe également des capacités de couplage entre la dalle tactile, sa connectique et les pièces mécaniques constituant le dispositif, ainsi qu'un couplage mutuel entre les différentes pistes reliant les lignes et les colonnes au dispositif électronique de mesure.

Par conséquent, l'acquisition d'une dalle tactile capacitive ne peut se réduire à l'acquisition d'une simple capacité projetée par un opérateur. Elle est le résultat de cette projection sur un composant complexe multipolaire composé d'une association de résistances et de capacités interconnectées entre elles.

Le dispositif selon l'invention exploite cette complexité. Comme on le voit sur la figure 2, en l'absence d'objet au voisinage de la matrice, chaque ligne Lᵢ est reliée à une alimentation en tension alternative au travers d'une capacité d'injection Cᵢ et à un buffer de lecture qui possède une impédance d'entrée constituée d'une capacité de couplage parasite par rapport à la masse Cₘ et une résistance d'entrée Rₘ. Cette ligne Lᵢ possède une résistance linéique et se trouve couplée capacitivement à chaque croisement de colonne.

Lorsqu'un doigt se pose sur un point précis de la ligne Lᵢ, il projette une capacité sur la portion de la ligne considérée. Les dispositifs tactiles selon l'art antérieur mesurent uniquement cette capacité projetée. Cette simple mesure ne permet pas de connaître la position de l'appui sur la ligne, cette information n'étant pas portée par la valeur de la capacité projetée.

Le coeur de l'invention est de ne pas considérer simplement la capacité rapportée, mais son effet sur le modèle complexe que constitue la ligne entière. En particulier, si l'on considère la résistance Rᵢₗ de la ligne Lᵢ de longueur I, alors il existe une résistance Rᵢₐ entre une extrémité de la ligne et le point de contact. La résistance Rᵢₐ est inférieure à Rᵢₗ. Cette valeur de résistance modifie le signal de sortie V_{OUT}. Ce signal V_{OUT} vaut :
V_{OUT} = Z.V_{IN} avec V_{IN}: signal d'entrée périodique de fréquence F et Z : impédance de la ligne qui vaut :
Z=A+Bj Les termes A et B étant des fonctions des capacités Cₘ, Cᵢ et C_{d} et des résistances Rₘ et Rᵢₐ.

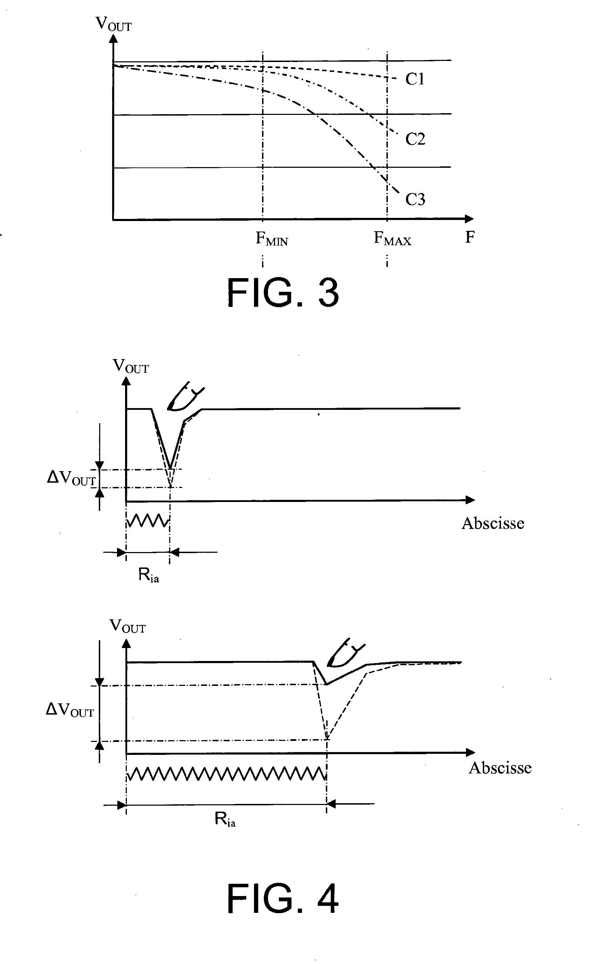

La topologie du modèle s'assimile au premier ordre à un réseau RC ou la résistance Rᵢₐ, associée à la capacité C_{d} constitue un filtre passe bas de premier ordre. La figure 3 représente, en fonction de la fréquence appliquée, la variation du signal de sortie d'une ligne pour trois positions d'appui différentes, la première courbe C1 pour un appui situé en bord de ligne, la seconde C2 pour un appui en milieu de ligne, la troisième courbe C3 pour un appui en fin de ligne. L'échelle de la figure 3 est logarithmique sur les deux axes. Il existe alors, comme on le voit sur la figure 3 une fréquence F_{MIN} telle que les variations de Rᵢₐ provoquent une variation minimale de V_{OUT} quelque soit la position de l'appui. A l'inverse, il existe une fréquence F_{MAX} telle que les variations de Rᵢₐ provoquent une atténuation importante de V_{OUT} en fonction de la position de l'appui. Ainsi, à cette fréquence F_{MAX}, en mesurant cette atténuation, il est alors facile de connaître la valeur de la résistance Rᵢₐ et par conséquent, de déterminer la position du point de contact sur la ligne.

La figure 4 représente les variations du signal de sortie V_{OUT} pour les fréquences F_{MIN} et F_{MAX} le long d'une ligne conductrice en fonction de la position de l'appui. Cette figure 4 comporte deux graphiques. Le graphique du haut représente les variations en début de ligne. Le graphique du bas représente les variations du signal de sortie V_{OUT} en fin de ligne. Sur la figure 4, les courbes en traits continus représentent les variations du signal V_{OUT} à la fréquence F_{MAX} et les courbes en traits pointillés représentent les variations du signal V_{OUT} à la fréquence F_{MIN}. En mesurant V_{OUT} aux deux fréquences F_{MIN} et F_{MAX}, on obtient une information sur la valeur de la résistance Rᵢₐ de la ligne mesurés qui permet de déterminer la position du point de contact sur la ligne. Cette mesure n'est pas nécessairement très précise. Elle est cependant suffisante. En effet, comme on l'a vu, le problème principal de la détection de type « Self capacitive » est l'apparition des ghosts. Connaissant, même approximativement, par la double mesure à deux fréquences différentes, les positions des appuis, l'indétermination entre le couple d'appuis réels et le couple d'appuis « ghosts » est levé.

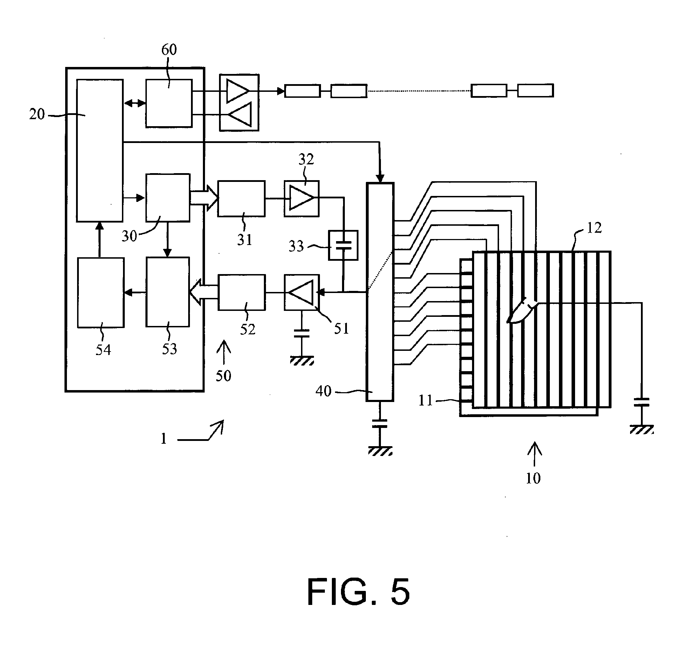

Le dispositif selon l'invention comporte les moyens permettant la mise en oeuvre de ce principe de mesure capacitive à double fréquence. A titre d'exemple non limitatif, la figure 5 représente un dispositif 1 à dalle tactile à détection capacitive projetée selon l'invention. il comprend essentiellement :
- une dalle tactile 10 comprenant un premier substrat comportant une première série de lignes conductrices 11 parallèles entre elles et un second substrat comportant une seconde série de colonnes 12 conductrices parallèles entre elles ;
- des moyens de commande et d'analyse 20 des différents signaux d'émission et de réception nécessaires au fonctionnement du dispositif tactile ;
- Un générateur 30 haute fréquence sinusoïdal à fréquence variable alimentant la dalle tactile en tensions alternatives V_{IN} par l'intermédiaire d'un convertisseur numérique-analogique « DAC » 31, d'un amplificateur 32 et d'une capacité d'injection 33. Typiquement, les fréquences sont comprises entre quelques centaines de KHz et quelques MHz ;
- Un multiplexeur 40. Il applique la tension d'entrée V_{IN} successivement à chaque colonne 12 puis à chaque ligne 11 de la dalle tactile 10 et dirige chaque tension de sortie V_{OUT} correspondant à une tension V_{IN} appliquée vers une chaîne de traitement électronique 50 ;
- Une chaîne de traitement électronique 50 qui comprend une mémoire-tampon ou « buffer » 51, un convertisseur analogique-numérique ou ADC 52, un démodulateur synchrone 53 relié au générateur de fréquences 30 et des moyens électroniques de filtrage 54. Les signaux filtrés sont envoyés aux moyens d'analyse 20 ;
- Des moyens d'émission-réception 60 ou « UART » signifiant « Universal Asynchronous Receiver Transmitter » qui assure la retransmission des signaux traités par les moyens d'analyse 20 vers l'extérieur qui est généralement un dispositif de visualisation couplé avec la dalle tactile et qui affiche des informations que l'on souhaite commander, modifier ou valider.

Le fonctionnement du dispositif est le suivant. En mode nominal, les lignes et les colonnes de la dalle sont balayées en permanence et successivement par une tension d'entrée V_{IN} à une première fréquence de travail F_{MIN} et à une seconde fréquence dite de discrimination F_{MAX}. Cette tension est générée par l'ensemble électronique composé des moyens 30, 31, 32 et 33.

Lors d'un appui représenté symboliquement par un doigt sur la figure 5 et suivant la position de cet appui, il se crée une certaine capacité entre le point de contact et la masse, cette capacité étant principalement relié par une résistance de lignes et de colonnes au multiplexeur 40.

Cette composante résistive et capacitive va provoquer une variation de l'impédance totale Z du système, et agir sur le signal de sortie V_{OUT} qui vaut, comme on l'a dit, Z.V_{IN} avec Z=A+Bj. Le signal V_{OUT} est ensuite démodulé par la chaîne électronique 50 afin d'en extraire la valeur efficace V_{OUT}=Z.V_{IN}, avec Z=A+Bj et j=sin(2π.F.t) au moyen d'un démodulateur synchrone 53. La démodulation synchrone permet de filtrer les perturbations électromagnétiques « EMI » en agissant comme un filtre passe bande à facteur de qualité élevé, ce qui évite l'emploi de filtrages passifs peu sélectifs.

Deux mesures au moins sont effectuées, une à la fréquence de travail F_{MIN}, et une à la fréquence de discrimination F_{MAX}. On peut, pour des dalles de dimension importante, utiliser plusieurs fréquences de discrimination F_{MAX}. Avantageusement, les fréquences F_{MIN} et F_{MAX} sont modulées et démodulées séparément au moyen de deux démodulateurs synchrones 53, ce qui permet d'obtenir en une seule mesure les valeurs de la capacité C et de la résistance R, représentatives de la position de l'appui.

Enfin, le signal continu filtré issu du démodulateur 53 est filtré au moyen du filtrage 54.

En l'absence d'approche de la main, le contrôleur tactile effectue en permanence une image de la dalle à la fréquence F_{MIN} et en déduit une table au repos des impédances par moyenne glissante. Cette image est soustraite à la table des valeurs instantanées des impédances, pour former la table des écarts, à partir de laquelle il est possible d'attribuer à chaque point de croisement son statut. Cette méthode est en partie décrite dans le brevet EP 0 567 364 intitulé « Process for operating a capacitive tactile keyboard ».

Lors d'un appui simple, sa position en ligne et en colonne est calculée à partir d'un barycentre pondéré autour du signal ligne et du signal colonne de déviation maximum, le doublet de points donnant la coordonnée de l'appui.

En cas d'appuis multiples alignés, la ligne ou la colonne commune est calculée de la même manière, le triplet de points donnant les coordonnées des deux appuis.

En cas d'appuis multiples non alignés, le quadruplet de points est mesuré à la fréquence F_{MIN}, puis à la fréquence F_{MAX}. La variation du signal consécutive à la variation de fréquence est utilisée pour déterminer la rejection du ghost et le quadruplet de points permet de donner les coordonnées des différents appuis.

Comme on le voit, les moyens électroniques mis en oeuvre dans le dispositif tactile selon l'invention sont simples et permettent de résoudre efficacement les principaux problèmes de la détection capacitive projetée, c'est-à-dire la détection des appuis fantômes, l'insensibilité aux perturbations électromagnétiques externes due à la détection synchrone, l'absence de perturbations de l'environnement électronique par l'utilisation de signaux sinusoïdaux purs et sans harmoniques.

## Revendications

1. Dispositif à écran tactile (1) à détection capacitive projetée comprenant une dalle tactile (10) matricielle comportant une pluralité de lignes conductrices (11) et de colonnes conductrices (12), ladite dalle étant reliée à :
des moyens de commande et d'analyse électroniques (20) générant, au moyen d'un générateur de fréquences (30), pour chaque ligne et pour chaque colonne conductrice, des tensions d'émission (V_{IN}) et ;
des moyens de réception et d'analyse électroniques (20, 40, 50) des tensions de réception (V_{OUT}) issues de chaque ligne et de chaque colonne conductrice, **caractérisé en ce que** :
- les moyens de commande électroniques (20) génèrent, pour chaque ligne et pour chaque colonne conductrice, une première tension d'émission périodique émise à une première fréquence notée fréquence de travail et une seconde tension d'émission périodique émise à une seconde fréquence notée fréquence de discrimination, différente de la première fréquence ;
- Les moyens de réception et d'analyse électroniques comprennent un multiplexeur (40), une chaîne de traitement électronique (50) comportant au moins un démodulateur synchrone (53) relié au générateur de fréquences (30) et des moyens électroniques de filtrage (54), les signaux filtrés étant envoyés aux moyens d'analyse (20) agencés de façon à déterminer, pour chaque ligne et pour chaque colonne :
∘ La valeur d'une première tension de réception à la fréquence de travail et la valeur d'une seconde tension de réception à la fréquence de discrimination ;
∘ Si, en fonction de valeurs prédéterminées, les valeurs des deux tensions de réception sont représentatives d'un appui sur la dalle tactile et la localisation de cet appui sur la ligne ou sur la colonne concernée.

2. Dispositif à écran tactile selon la revendication 1, **caractérisé en ce que** la valeur de la fréquence de travail est suffisamment faible pour provoquer de très faibles variations de la partie résistive des impédances des tensions de réception à cette fréquence de travail et **en ce que** la valeur de la fréquence de discrimination est suffisamment élevée pour provoquer des variations significatives de la partie résistive des impédances des tensions de réception à cette fréquence de discrimination.

3. Dispositif à écran tactile selon l'une des revendications 1 ou 2, **caractérisé en ce que** les moyens de réception et d'analyse électroniques des tensions de réception comportent deux démodulateurs synchrones (53), le premier démodulateur travaillant à la fréquence de travail, le second démodulateur à la fréquence de discrimination.

4. Dispositif à écran tactile selon l'une des revendications précédentes, **caractérisé en ce que** les moyens de réception et d'analyse électroniques comportent :
- une table des valeurs stockées des tensions de réception à la fréquence de travail de chaque ligne et de chaque colonne en l'absence d'appui ;
- des moyens de comparaison établissant, pour chaque ligne et pour chaque colonne, les écarts entre les valeurs mesurées des tensions de réception et les valeurs stockées des tensions de réception de façon à déterminer si les écarts mesurés sont représentatifs d'un appui sur la ligne ou sur la colonne concernée.

5. Dispositif à écran tactile selon l'une des revendications précédentes, **caractérisé en ce que** la fréquence de travail est comprise entre 100 kHz et 500 kHz et **en ce que** la fréquence de discrimination est comprise entre 500 kHz et 5 MHz.

## Patentansprüche

1. Berührungsbildschirmvorrichtung (1) mit projizierter kapazitiver Detektion, die ein Matrix-Touchpad (10) umfasst, das mehrere leitende Reihen (11) und leitende Spalten (12) umfasst, wobei das Pad verbunden ist mit:
elektronischen Steuer- und Analysemitteln (20) zum Erzeugen, mittels eines Frequenzgenerators (30), von Emissionsspannungen (V_{IN}) für jede leitende Reihe und Spalte, und
elektronische Mittel (20, 40, 50) zum Empfangen und Analysieren von Empfangsspannungen (V_{OUT}), die von jeder leitenden Reihe und Spalte kommen, **dadurch gekennzeichnet, dass**:
die elektronischen Steuermittel (20) für jede leitende Reihe und Spalte eine mit einer ersten Frequenz, Arbeitsfrequenz genannt, übertragene erste periodische Sendespannung und eine zweite periodische Sendespannung erzeugen, die mit einer zweiten Frequenz, Unterscheidungsfrequenz genannt, gesendet wird, die sich von der ersten Frequenz unterscheidet;
wobei die elektronischen Empfangs- und Analysemittel einen Multiplexer (40), eine elektronische Verarbeitungskette (50) mit wenigstens einem mit dem Frequenzgenerator (30) verbundenen synchronen Demodulator (53) und elektronische Filtermittel (54) umfassen, wobei die gefilterten Signale zu den Analysemittel (20) gesendet werden, so ausgelegt, dass sie für jede Reihe und für jede Spalte Folgendes ermitteln:
den Wert einer ersten Empfangsspannung auf der Arbeitsfrequenz und den Wert einer zweiten Empfangsspannung auf der Unterscheidungsfrequenz;
ob, in Abhängigkeit von vorbestimmten Werten, die Werte der beiden Empfangsspannungen eine Betätigung des Touchpad repräsentieren, sowie den Ort dieser Betätigung in der betroffenen Reihe oder Spalte.

2. Berührungsbildschirmvorrichtung nach Anspruch 1, **dadurch gekennzeichnet, dass** der Wert der Arbeitsfrequenz niedrig genug ist, um sehr geringe Variationen des resistiven Teils der Impedanzen der Empfangsspannungen auf der Arbeitsfrequenz zu bewirken, und dadurch, dass der Wert der Unterscheidungsfrequenz hoch genug ist, um signifikante Variationen des resistiven Teils der Impedanzen der Empfangsspannungen auf dieser Unterscheidungsfrequenz zu bewirken.

3. Berührungsbildschirmvorrichtung nach Anspruch 1 oder 2, **dadurch gekennzeichnet, dass** die elektronischen Empfangs- und Analysemittel für die Empfangsspannungen zwei synchrone Demodulatoren (53) umfassen, wobei der erste Demodulator auf der Arbeitsfrequenz arbeitet und der zweite Demodulator auf der Unterscheidungsfrequenz arbeitet.

4. Berührungsbildschirmvorrichtung nach einem der vorherigen Ansprüche, **dadurch gekennzeichnet, dass** die elektronischen Empfangs- und Analysemittel Folgendes umfassen:
eine Tabelle der gespeicherten Werte der Empfangsspannungen auf der Arbeitsfrequenz jeder Reihe und jeder Spalte in Abwesenheit einer Betätigung;
Vergleichsmittel, die für jede Reihe und für jede Spalte die Differenzen zwischen den gemessenen Werten der Empfangsspannungen und den gespeicherten Werten der Empfangsspannungen feststellen, um zu ermitteln, ob die gemessenen Differenzen eine Betätigung in der betroffenen Reihe oder Spalte repräsentieren.

5. Berührungsbildschirmvorrichtung nach einem der vorherigen Ansprüche, **dadurch gekennzeichnet, dass** die Arbeitsfrequenz zwischen 100 kHz und 500 kHz liegt, und dadurch, dass die Unterscheidungsfrequenz zwischen 500 kHz und 5 MHz liegt.

## Claims

1. A touchscreen device (1) with projected capacitive detection, comprising a matrix touchpad (10) with a plurality of conducting rows (11) and of conducting columns (12), said pad being connected to:
electronic control and analysis means (20) generating, by means of a frequency generator (30), transmission voltages (V_{IN}) for each conducting row and column, and
electronic reception and analysis means (20, 40, 50) for reception voltages (V_{OUT}) coming from each conducting row and column, **characterised in that**:
said electronic control means (20) generate, for each conducting row and column, a first periodic transmission voltage transmitted at a first frequency, referred to as working frequency, and a second periodic transmission voltage transmitted at a second frequency, referred to as discrimination frequency, which is different from said first frequency;
said electronic reception and analysis means comprise a multiplexer (40), an electronic processing chain (50) with at least one synchronous demodulator (53) linked to said frequency generator (30) and electronic filtering means (54), with filtered signals being sent to said analysis means (20), which are designed to determine, for each row and for each column:
the value of a first reception voltage at said working frequency and the value of a second reception voltage at said discrimination frequency;
whether, as a function of predetermined values, the values of the two reception voltages represent a touch on said touchpad and the location of this touch on the relevant row or column.

2. The touchscreen device according to claim 1, **characterised in that** the value of said working frequency is low enough to cause very small variations in the resistive part of the impedances of the reception voltages at said working frequency and **in that** the value of said discrimination frequency is high enough to cause significant variations in the resistive part of the impedances of the reception voltages at said discrimination frequency.

3. The touchscreen device according to claim 1 or 2, **characterised in that** said electronic reception and analysis means for the reception voltages comprise two synchronous demodulators (53), the first demodulator working at said working frequency and the second demodulator working at said discrimination frequency.

4. The touchscreen device according to any one of the preceding claims, **characterised in that** said electronic reception and analysis means comprise:
a table of stored values of the reception voltages at the working frequency of each row and of each column in the absence of a touch;
comparison means establishing, for each row and for each column, the differences between the measured values of the reception voltages and the stored values of the reception voltages so as to determine whether the measured differences represent a touch on the relevant row or column.

5. The touchscreen device according to any one of the preceding claims, **characterised in that** said working frequency is between 100 kHz and 500 kHz and **in that** said discrimination frequency is between 500 kHz and 5 MHz.
